# EUROPEAN PATENT SPECIFICATION

(11) **EP 4 183 286 B1**
(45) Date of publication and mention of the grant of the patent: **13.11.2024**
(21) Application number: 22208224.0
(22) Date of filing: 18.11.2022
(51) Int. Cl.: A43B 1/00, A43B 1/12, B29D 35/02, B29D 35/12, A43B 13/04, B29B 17/04, B29B 17/00, B29L 31/54

(54) **METHOD FOR MAKING SOLES FOR FOOTWEAR WITH THE USE OF RECOVERED MATERIAL**
VERFAHREN ZUR HERSTELLUNG VON SOHLEN FÜR SCHUHWERK UNTER VERWENDUNG VON RECYCLINGMATERIAL
PROCEDE DE FABRICATION DE SEMELLES POUR CHAUSSURES AVEC UTILISATION DE MATERIAUX RECUPERES

(30) Priority: 18.11.2021 IT 202100029255
(43) Date of publication of application: 24.05.2023
(73) Proprietor: Return Societa' Benefit a Responsabilita' Limitata, 35129 Padova (IT)
(72) Inventor: Giampieretti, Marco, Padova (IT); Barbieri, Giorgio, Padova (IT)
(74) Representative: Bruni, Alessandro

(56) References cited:
- EP-A1- 3 308 663
- US-A1- 2018 220 746

## Description

The present invention relates to a method for manufacturing shoe soles which also provides for the use of material recovered from exhausted tennis balls.

The expression exhausted tennis balls is intended to indicate used tennis balls which have a deterioration in performance such as to determine their discard.

Recent studies report that around 400 million tennis balls are used in the world every year. Such high consumption is determined by several factors including the fact that a tennis ball has a short life cycle due to the loss of pressure to which it is subjected and the rapid wear of the materials that compose it, with particular reference to the surface felt.

The deterioration of the external felt layer varies according to the conditions of use of the tennis ball, with reference to the characteristics of the playing surface, the strings of the rackets and the climatic conditions of use.

As known, a tennis ball is made from multiple non-biodegradable and non-compostable type materials.

In particular, they include two mixtures of rubber, carbon black, sulfur and other substances, joined together through a vulcanization process, on which two films of felt are glued - made using a mixed material of wool and synthetic fibers - necessary to allow a better grip by the strings of a racket and to increase their friction with the air, thus making them more controllable.

Due to the mixed composition and the bond between the inner and outer layers, recycling tennis balls is difficult, thus determining several tons of waste material to be sent to landfills or waste-to-energy plants for their disposal.

The waste caused by discarded tennis balls causes a waste of large quantities of high quality raw materials, helping to increase soil consumption as well as the production of harmful emissions for the environment.

In the shoe sole manufacturing sector, the use of inert materials or recycled materials is known to reduce the quantity of raw materials to be used and allow the recovery of waste material.

By way of example, it is known to use small fragments, generally to the maximum extent of a few millimetres, for example 2-3mm, such as small pieces of cork or rubber fragments coming from used shoe soles or scrap tires or, again, material coming from plastic bottles.

Documents US 11135796 B2 and US 2014/0217636 A1 teach methods for making soles for footwear which involve the use of recycled material such as thermoplastic elastomers TPE or ethylene-vinyl-acetate (EVA) to be integrated with the normally used raw materials in the production of shoe soles.

As a rule, the quantity of recycled material used in the manufacture of shoe soles is modest and, therefore, does not allow for an appreciable reduction in the quantity of raw material to be used for the production of shoe soles.

Furthermore, it should be noted that if the recycled material to be used is of the type which does not bind mechanically and/or chemically with the components that make up a shoe sole, i.e. an inert material, the same can only be used in the form of fragments extremely small in size as the fragments simply sink into the mix without binding to it. When these fragments emerge at the surface of the sole, or are arranged at the sole, they can be easily removed, for example, by hand extraction.

It follows that in a sole containing such fragments a detachment of the same can easily occur when the sole is subjected to strong abrasions and mechanical bending and/or torsion stresses.

The detachment of the fragments causes discontinuities in which cracks or breakages can originate which compromise the performance of the sole itself and, consequently, of the shoe that includes it, causing a rapid decline in its performance, with obvious repercussions on the amount of waste material that is produced and needs to be disposed of.

Document US 2018/0220746A1 describes a method for using tennis balls in making soles for footwear.

In the field, there is a need to be able to increase the use of recycled material to be added to the raw materials typically used in the production of soles for footwear while guaranteeing high performance to the sole.

In this context, it should be noted that due to the high number of exhausted tennis balls, they represent a huge waste material whose recycling would make it possible to reduce the waste material to be disposed of with the consequent advantages from an impact point of view on the environment as well as disposal costs.

Furthermore, tennis balls are made with quality material and, therefore, the recovery material that can be obtained from them also has a high quality.

The object of the present invention is to allow in a simple, efficient and practical way to make a shoe sole through the use of recycled material from tennis balls.

Another object of the present invention is to facilitate the recycling of the components of tennis balls, i.e. rubber and felt through a method which allows the production of a sole whose technical characteristics, in terms of resistance to abrasion, tensile strength, deformation at rupture, total number of flexes are able to satisfy specific use requirements, for daily use or for amateur or competitive sports use.

A further object of the present invention is that of optimizing the production costs of a shoe sole by being able to recover high-performance recycled material whose cost is lower than the cost of components of the traditional type used in the production of shoe soles.

The specific object of the invention is a method for making soles for footwear according to the appended claim 1.

According to another aspect of the invention, the step of crushing the tennis balls may comprise a step of cutting the tennis balls into fragments of predetermined size.

According to a further aspect of the invention, the fragments can have a square or substantially square plan dimension or be contained in a plan dimension within a square or substantially square area with a side equal to 10mm.

According to an additional aspect of the invention, the step of crushing the tennis balls can comprise a step of mechanical separation between the rubber components and the felt components of the tennis balls.

According to another aspect of the invention, the mechanical separation step can comprise a surface peeling step through the use of at least one mechanical plate which acts on an outer surface of the tennis balls and a subsequent step of shredding the rubber components previously covered with felt components.

According to a further aspect of the invention, the mechanical separation step can comprise a surface abrasion process of the felt included in the tennis balls performed by means of abrasive rollers or rotating metal brushes or abrasive cylinders.

According to an additional aspect of the invention, the method for manufacturing shoe soles can comprise a step of moistening the spent tennis balls before carrying out the mechanical separation step to limit a fire risk of said felt.

According to another aspect of the invention, the step of adding the tennis ball fragments into the compound may comprise adding a percentage of fragments between 5% and 20%, optionally between 5 and 10%.

According to a further aspect of the invention, during the mixing step the rubber compound can be maintained at a temperature range between 110°C and 170°C, optionally between 130°C and 150°C for a time interval between 5 and 15 minutes, optionally between 5 and 10 minutes.

According to an additional aspect of the invention, the step of forming the sole in the at least one mould can be performed at a temperature ranging from 150°C to 200°C optionally from 160°C to 180°C for a time ranging from 5 to 15 minutes, optionally between 5 and 10 minutes.

The advantages offered by the method for making shoe soles according to the invention are evident.

The method for making shoe soles according to the invention comprises the use of material deriving from exhausted tennis balls to be used as recycled material to replace, at least partially, the virgin raw materials which are used in the production of shoe soles.

It should be noted that the method for making footwear according to the invention provides for the use of a considerable quantity of recycled material which can be used, making it possible to significantly reduce the quantity of virgin raw material required, according to a solution in able to reduce the impact on the environment as well as contain production costs compared to traditional solutions which do not involve the use of any recycled material or, in the event that they involve the use of recycled material, have high costs for the treatment of the recovered material itself before it can be used.

Furthermore, the method for making soles for footwear according to the invention allows to obtain soles with high mechanical performance, suitable for use in competitive sports activities, or alternatively to produce soles for amateur sports use or, again, to produce soles for daily use, therefore in the context of an extremely versatile and flexible use solution.

The present invention will now be described, for illustrative but not limiting purposes, according to its preferred embodiments, with particular reference to the Figures of the attached drawings, wherein:
Figure 1 shows a top view of a sole made using the method for manufacturing soles according to the invention;
Figures 2 and 3 show detailed views of soles made using the method for manufacturing soles according to the invention;
Figure 4 shows a bottom view of a shoe sole made using the method for making soles according to the invention.

The attached figures show by way of example an example of a sole 1 which can be obtained through the method for making soles according to the invention.

This method of making soles comprises an initial step of supplying a material recovered from exhausted tennis balls.

The initial phase involves the supply of exhausted tennis balls, for example through a recovery service of the same at sports clubs or special collection points and then the mechanical treatment of the tennis balls to crush them and obtain small pieces, in the order of a few millimetres, as better indicated below.

The term crushing is intended to indicate, in a generic way, the use of one or more mechanical cutting or abrasion actions, such as to allow a tennis ball to be reduced into granules or substantially into granules of reduced dimensions.

In particular, the use of a mechanical machine capable of shredding tennis balls by means of a cutting action is envisaged, so as to obtain pieces of various dimensions, preferably in the order of a few millimetres.

According to a preferred embodiment of the method, the step of crushing involves a step of obtaining fragments in the order of about ten millimetres. More precisely, the fragments have a plan dimension, for example a square plan, of about 10mm per side and with a thickness equal to that of a tennis ball, about 2-3mm.

It is understood that the fragments can have a different overall size in plan than the square one, indicated above merely by way of example, while falling within the same inventive concept of the present method.

Through a sieving or winnowing process, the size of the fragments to be used is selected.

According to an alternative embodiment of the method for manufacturing shoe soles, the crushing step comprises a first step for mechanical separation of the rubber and felt components of the tennis balls.

This phase of mechanical separation of the felt from the rubber takes place through a surface peeling process carried out through at least one metal foil, preferably a plurality of metal foils which act on the outer surface of the tennis balls.

According to an alternative embodiment, the mechanical separation step is performed through a surface abrasion process of the felt with abrasive metal rollers, rotating metal brushes or rotating abrasive cylinders.

Optionally, in the case of surface peeling or surface abrasion, the method comprises a washing phase of the balls, for example by immersion in suitable tanks or by controlled delivery of water against the tennis balls themselves, so as to moisten the felt and limit the risk of fire of the same given that, as known, the felt is a flammable material.

After removing the felt from the tennis ball, the rubber layer, previously covered with felt, is cut and shredded.

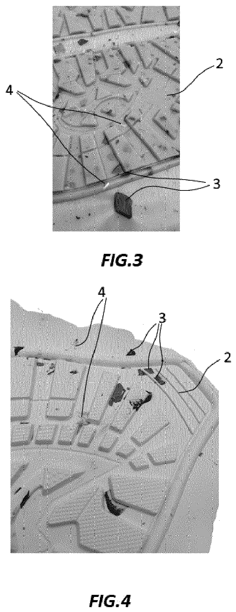

The method for making soles provides for making a compound, which constitutes the matrix 2 in which the crushed material of the tennis balls is embedded, according to a specific recipe (see for example Figure 3).

Preferably, the crushed material which is added to the blend comprises fragments of the tennis balls as cut and optionally sieved or screened.

The crushed material therefore comprises fragments which in turn comprise at least a rubber portion 3 and/or at least a felt fragment 4.

The shredded material, as it is obtained after the crushing process, is incorporated in the matrix 2, as better described below-

It should be noted that the method for making soles involves the use of specific recipes for making corresponding soles according to the mechanical characteristics to be obtained.

In this regard, as previously described, an object of the present invention is to provide soles for footwear which can be used in sports activities of the competitive type and, therefore, which have high mechanical properties.

It should be noted that the internal portion of the tennis balls is composed of elastomers while the external felt is partly composed of wool and thermoplastics, the properties of which can be variable within pre-established ranges, within the reach of an expert in the sector and that therefore, they will not be described in detail.

These elastomers and thermoplastics have the characteristic of softening or melting at specific temperatures.

Exploiting this feature it was discovered that it is possible to improve the mechanical aggregation between the rubber compound with which a shoe sole is made and the fragments deriving from the crushing process of tennis balls.

The method for manufacturing a sole according to the invention, following the step of preparing a rubber-based compound, provides for a step of introducing the fragments of the tennis balls obtained by crushing into the compound itself.

According to the invention the percentage of tennis ball fragments which is added to the rubber compound is between 3% and 25%.

Depending on the use for which the sole to be produced is intended, the percentage of tennis ball fragments may vary with respect to the range indicated above.

In particular, the percentage can vary between 5% and 10% in the event that the sole to be produced must present high performance, for example to allow its use in intense sports, such as competitive sports, between 5 % and 15% in the case in which the sole must present good performance, for example to allow its use in medium or low intensity sports, such as for example amateur sports, or between 5% and 20% in the case where the sole to be produced must have standard performance compatible with daily use of the shoe, for example for walking.

The method then includes a phase of mixing and stirring the compound to promote the distribution and dispersion of the fragments themselves within the compound.

During this mixing step, the rubber compound is maintained at a temperature range indicatively between 110°C and 170°C, more preferably between 130°C and 150°C for a time interval between 5 and 15 minutes, preferably between 5 and 10 minutes, to allow the fragments of the tennis balls to mix with the compound itself and to promote their subsequent reciprocal connection during the moulding of the sole.

After the mixing step, the moulding step takes place according to a methodology within the reach of the person skilled in the field which, therefore, will not be described in detail.

As known, moulding, depending on the technology used, involves casting or injecting the compound in which the fragments are dispersed inside a cavity that reproduces the shape of the sole.

According to one aspect of the method for manufacturing a sole, the moulding process is carried out at a temperature comprised between 150°C and 200°C more preferably between 160°C and 180°C for a time interval comprised between 5 and 15 minutes, preferably between 5 and 10 minutes.

During the molding phase it is known to carry out degassing phases to allow the air developed inside the moulds to be able to escape, avoiding that it can remain trapped inside the compound and determine the undesired formation of bubbles or cavities inside the sole itself.

It is believed that the moulding steps of a shoe sole are within the reach of a person skilled in the art and, therefore, will not be further disclosed.

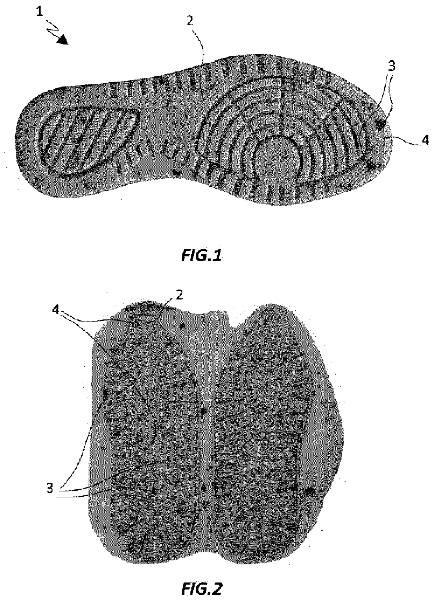

With reference to the attached Figure 2, the same shows two soles at the end of the moulding phase, with a part of scrap that protrudes along the perimeter of the sole itself, while the attached Figure 1 shows a sole made using the production method according to the invention, configured to be used in a shoe and, more precisely, to be connected to a respective upper.

Some examples of recipes of the ingredients used for making soles by means of the production method according to the invention are given below.

It should be noted that the type of recipe to be used varies according to the type of sole to be obtained, with particular reference to the mechanical characteristics of the sole which, in fact, establish the type of use thereof.

The method according to the invention provides a first recipe for making a sole of the walking type and, therefore, for daily use which provides for the use of the following ingredients:

| **Ingredient** | **Percentage** |
|---|---|
| ELASTOMERS | 50-60% |
| LOAD KAOLIN | 5-7% |
| LOAD SILICA | 15-18% |
| ACCELERATORS | 1-2% |
| ZINC CARBONATE | 1-3% |
| SILANE | 0,5-2% |
| WAX | 0,1-1% |
| ANTIOXIDANT | 0,1-1% |
| ACTIVATORS | 3-5% |
| PLASTICIZER | 1-3% |
| RESIN | 1-3% |
| SULFUR | 1-2% |
| COLOR | 1-6% |
| FRAGMENTS OF TENNIS BALLS (as obtained following the crushing) | 5-20% |

Instead, for the production of a shoe sole for amateur sports use, the production method according to the invention provides for the following second recipe:

| **Ingredient** | **Percentage** |
|---|---|
| RUBBER | 50-60% |
| LOAD SILICA | 25-35% |
| ACCELERATORS | 1-2% |
| ZINC CARBONATE | 1-2% |
| ACTIVATING | 2-3% |
| STEARIC ACID | 0,1-1% |
| SILANE | 2-3% |
| ANTIOXIDANT | 0,1-1% |
| ACTIVATORS | 3-5% |
| PLASTICIZER | 1-3% |
| RESIN | 2-3% |
| SULFUR | 1-2% |
| COLOR | 1-6% |
| FRAGMENTS OF TENNIS BALLS (as obtained following the crushing) | 5-15% |

A shoe sole made according to the above recipe has the following characteristics.

| | **Reference values** | **Sole values compliant with the second recipe** |
|---|---|---|
| hardness (SHA - ISO 868) | 50-80 | 65-70 |
| abrasion (ISO 4649) | 70-90 | 70-80 |
| breaking strength (ISO 1283) | >12 | >14 |
| deformation (ISO 1283) | >500 | >500 |
| tearing (ISO 34/1) | >40 | >50 |

From the foregoing it is clear that a shoe sole manufactured according to the recipe reported above is able to satisfy the requirements required of a shoe sole for sports use for non-intense activities, for example of the amateur type.

Furthermore, for the production of a shoe sole for competitive and therefore intense sports use, the production method according to the invention provides for the following third recipe:

| **Ingredient** | **Percentage** |
|---|---|
| RUBBER | 45-55% |
| LOAD SILICA | 30-35% |
| ACCELERATORS | 1-2% |
| ZINC CARBONATE | 1-2% |
| ACTIVATING | 2-3% |
| STEARIC ACID | 0,1-1% |
| SILANE | 2-3% |
| ANTIOXIDANT | 0,1-1% |
| ACTIVATORS | 2-3% |
| PLASTICIZER | 1-2% |
| RESIN | 2-5% |
| SULFUR | 1-2% |
| COLOR | 1-6% |
| FRAGMENTS OF TENNIS BALLS (as obtained following the crushing) | 5-10% |

A shoe sole made according to the above recipe has the following characteristics.

| | **Reference value** | **Sole values compliant with the second recipe** |
|---|---|---|
| hardness (SHA - ISO 868) | 60-70 | 60-70 |
| abrasion (ISO 4649) | 35-45 | 40-50 |
| breaking strength (ISO 1283) | >10 | >12 |
| deformation (ISO 1283) | >400 | >400 |
| tearing (ISO 34/1) | >40 | >50 |

From the foregoing it is clear that a shoe sole made according to the recipe previously reported is able to satisfy the requirements required of a shoe sole for sports use, for activities of a competitive type.

With reference to the foregoing, it is evident that the method for making soles for footwear including the use of recycled material such as tennis balls is capable of achieving the intended purposes.

The production method according to the invention, in fact, makes it possible to produce high-performance soles for footwear, through the complete recycling of exhausted tennis balls, i.e. both their rubber portion and their outer felt portion.

Furthermore, the production method according to the invention provides for the use of a high percentage of recycled material compared to solutions of the traditional type, providing for the use of up to 25% of recycled material.

This feature has the dual effect of reducing the environmental impact represented by exhausted tennis balls and containing production costs, given that the recycled material has a lower cost than that of the virgin raw materials to be included in the compounds for making the shoe soles.

In the foregoing the preferred embodiments have been described and variants of the present invention have been suggested, but it should be understood that those skilled in the art will be able to make modifications and changes without thereby departing from the relative scope of protection, as defined by the claims attached.

For example, it should be noted that the method for manufacturing soles according to the invention has been described in relation to soles for footwear, for traditional use as well as for sports use, while understanding that it is possible to use the method according to the invention for production of soles for alternative types of footwear, for example for work footwear or for mountain use.

## Claims

1. Method for making soles (1) for footwear including the steps of:
- crushing exhausted tennis balls, reducing them into fragments (3, 4) or granules of pre-established dimensions;
- selecting those among said fragments which have a predetermined size;
- making a rubber compound (2);
- adding said fragments of said exhausted tennis balls into said compound;
- mixing said compound comprising said fragments of tennis balls inside it;
said method being **characterized in that** it further comprises the steps of:
- using the compound forming at least one shoe sole (1) in at least one mould;
- extracting said at least one shoe sole from said at least one mould,
wherein said step of adding said fragments of said tennis balls into said compound comprises adding a percentage of fragments between 3% and 25%.

2. Method for making soles for footwear according to claim 1, wherein said step of crushing said tennis balls comprises a step of cutting said tennis balls by reducing them into fragments of predetermined dimensions.

3. Method for making soles for footwear according to claim 2, wherein said fragments have a square or substantially square plan dimension or are contained in a plan dimension within a square or substantially square area with side equal to 10mm.

4. Method for making soles for footwear according to claim 1, wherein said step of crushing said tennis balls comprises a step of mechanical separation between rubber components and felt components of said tennis balls.

5. Method for making soles for footwear according to claim 4, wherein said mechanical separation step comprises a surface peeling step through the use of at least one mechanical plate which acts on an outer surface of said tennis balls and a subsequent step of shredding said rubber components previously covered by said felt components.

6. Method for making soles for footwear according to claim 4, wherein said mechanical separation step comprises a surface abrasion process of said felt included in said tennis balls performed by means of abrasive rollers or rotating metal brushes or abrasive cylinders.

7. Method for making soles for footwear according to claim 5 or 6, comprising a step of moistening said exhausted tennis balls before performing said step of mechanical separation to limit a fire risk of said felt.

8. Method for making soles for footwear according to claim 1, wherein said step of adding said fragments of said tennis balls into said compound comprises adding a percentage of fragments between 5% and 20%, optionally between 5 and 10%.

9. Method for making soles for footwear according to claim 1, wherein during said mixing step said rubber compound is maintained at a temperature range between 110°C and 170°C, optionally between 130°C and 150°C for a time between 5 and 15 minutes, optionally between 5 and 10 minutes.

10. Method for making soles for footwear according to claim 1, wherein said step of forming said sole in said at least one mould is performed at a temperature in the range between 150°C and 200°C, optionally between 160°C and 180°C for between 5 and 15 minutes, optionally between 5 and 10 minutes.

## Patentansprüche

1. Verfahren zur Herstellung von Schuhsohlen (1), die folgenden Schritte umfassend:
- Zerkleinern von verbrauchten Tennisbällen, um sie in Fragmente (3, 4) oder Granulate mit vorgegebenen Abmessungen zu zerkleinern;
- Auswählen der Fragmente mit vorgegebener Größe unter diesen Fragmenten;
- Herstellen einer Gummimischung (2);
- Hinzufügen der Fragmente der verbrauchten Tennisbälle zu dieser Mischung;
- Mischen der Mischung, die die Fragmente der Tennisbälle enthält;
wobei das Verfahren ist **dadurch gekennzeichnet, dass** es weiter folgende Schritte umfasst:
- Verwender der Mischung zum Formen von mindestens einer Schuhsohle (1) in mindestens einer Form;
- Herausnehmen der mindestens einen Schuhsohle aus dieser mindestens einen Form,
wobei der Schritt des Hinzufügen der Fragmente der Tennisbälle ins Innere der Mischung das Hinzufügen eines Prozentsatzes zwischen 3% und 25% Fragmenten umfasst.

2. Verfahren zur Herstellung von Schuhsohlen gemäß Anspruch 1, wobei der Schritt des Zerkleinerns der Tennisbälle einen Schritt des Schneidens der Tennisbälle durch Zerkleinern in Fragmente mit vorgegebenen Abmessungen umfasst.

3. Verfahren zur Herstellung von Schuhsohlen gemäß Anspruch 2, wobei die Fragmente eine quadratische oder im Wesentlichen quadratische Grundrissabmessung aufweisen oder in einer Grundrissabmessung innerhalb eines quadratischen oder im Wesentlichen quadratischen Bereich mit einer Seitenlänge von 10 mm enthalten sind.

4. Verfahren zur Herstellung von Schuhsohlen gemäß Anspruch 1, wobei der Schritt des Zerkleinerns der Tennisbälle einen Schritt der mechanischen Trennung zwischen Gummikomponenten und Filzkomponenten der Tennisbälle umfasst.

5. Verfahren zur Herstellung von Schuhsohlen gemäß Anspruch 4, wobei der Schritt der mechanischen Trennung einen Oberflächenschälschritt durch die Verwendung von mindestens einer mechanischen Platte umfasst, die auf eine Außenfläche der Tennisbälle einwirkt, und einen anschließenden Schritt des Zerkleinerns der Gummikomponenten, die zuvor von den Filzkomponenten bedeckt wurden.

6. Verfahren zur Herstellung von Schuhsohlen gemäß Anspruch 4, wobei der Schritt der mechanischen Trennung einen Oberflächenschleifprozess des in den Tennisbällen enthaltenen Filzes umfasst, der mittels Schleifwalzen oder rotierenden Metallbürsten oder Schleifzylindern durchgeführt wird.

7. Verfahren zur Herstellung von Schuhsohlen gemäß Anspruch 5 oder 6, umfassend einen Schritt des Befeuchtens der verbrauchten Tennisbälle vor der Durchführung des Schritts der mechanischen Trennung, um ein Brandrisiko des Filzes zu begrenzen.

8. Verfahren zur Herstellung von Schuhsohlen gemäß Anspruch 1, wobei der Schritt des Hinzufügens der Fragmente der Tennisbälle zu der Mischung das Hinzufügen eines Prozentsatzes von 5 % bis 20 %, optional von 5 % bis 10 % Fragmenten umfasst.

9. Verfahren zur Herstellung von Schuhsohlen gemäß Anspruch 1, wobei während des Mischschritts die Gummimischung für eine Zeit zwischen 5 und 15 Minuten, optional zwischen 5 und 10 Minuten, in einem Temperaturbereich zwischen 110°C und 170°C, optional zwischen 130°C und 150°C gehalten wird.

10. Verfahren zur Herstellung von Schuhsohlen gemäß Anspruch 1, wobei der Schritt des Formens der Sohle in der mindestens einen Form bei einer Temperatur im Bereich zwischen 150°C und 200°C, optional zwischen 160°C und 180°C, für zwischen 5 und 15 Minuten, optional zwischen 5 und 10 Minuten, durchgeführt wird.

## Revendications

1. Procédé de fabrication de semelles (1) pour chaussures comprenant les étapes consistant à :
- broyer des balles de tennis épuisées, les réduisant en fragments (3, 4) ou granulés de dimensions préétablies;
- sélectionner parmi lesdits fragments ceux qui ont une taille prédéterminée;
- fabriquer un composé de caoutchouc (2);
- ajouter lesdits fragments desdites balles de tennis épuisées audit composé;
- mélanger ledit composé comprenant lesdits fragments de balles de tennis à l'intérieur de celui-ci;
ledit procédé étant **caractérisé en ce qu'**il comprend en autre les étapes de:
- utilisant le composé former au moins une semelle (1) de chaussure dans au moins un moule;
- extraire ladite au moins une semelle de chaussure dudit au moins un moule,
dans lequel la dite étape d'ajout desdits fragments desdites balles de tennis à l'intérieur dudit composé comprend l'ajout d'un pourcentage de fragments entre 3% et 25%.

2. Procédé de fabrication de semelles pour chaussures selon la revendication 1, dans lequel ladite étape de broyage desdites balles de tennis comprend une étape de découpe desdites balles de tennis en les réduisant en fragments de dimensions prédéterminées.

3. Procédé de fabrication de semelles pour chaussures selon la revendication 2, dans lequel lesdits fragments ont une dimension plane carrée ou sensiblement carrée ou sont contenus dans une dimension plane à l'intérieur d'une zone carrée ou sensiblement carrée de côté égal à 10 mm.

4. Procédé de fabrication de semelles pour chaussures selon la revendication 1, dans lequel ladite étape de broyage desdites balles de tennis comprend une étape de séparation mécanique entre des composants en caoutchouc et des composants en feutre desdites balles de tennis.

5. Procédé de fabrication de semelles pour chaussures selon la revendication 4, dans lequel ladite étape de séparation mécanique comprend une étape de pelage de surface par l'utilisation d'au moins une plaque mécanique qui agit sur une surface extérieure desdites balles de tennis et une étape ultérieure de déchiquetage desdits composants en caoutchouc préalablement recouverts par lesdits composants en feutre.

6. Procédé de fabrication de semelles pour chaussures selon la revendication 4, dans lequel ladite étape de séparation mécanique comprend un processus d'abrasion de surface dudit feutre inclus dans lesdites balles de tennis effectué au moyen de rouleaux abrasifs ou de brosses métalliques rotatives ou de cylindres abrasifs.

7. Procédé de fabrication de semelles pour chaussures selon la revendication 5 ou 6, comprenant une étape d'humidification desdites balles de tennis épuisées avant d'effectuer ladite étape de séparation mécanique pour limiter un risque d'incendie dudit feutre.

8. Procédé de fabrication de semelles pour chaussures selon la revendication 1, dans lequel ladite étape d'ajout desdits fragments desdites balles de tennis dans ledit composé comprend l'ajout d'un pourcentage de fragments compris entre 5% et 20%, éventuellement entre 5 et 10%.

9. Procédé de fabrication de semelles pour chaussures selon la revendication 1, dans lequel pendant ladite étape de mélange ledit composé de caoutchouc est maintenu à une température comprise entre 110°C et 170°C, éventuellement entre 130°C et 150°C pendant une durée comprise entre 5 et 15 minutes, éventuellement entre 5 et 10 minutes.

10. Procédé de fabrication de semelles pour chaussures selon la revendication 1, dans lequel ladite étape de formation de ladite semelle dans ledit au moins un moule est réalisée à une température comprise entre 150°C et 200°C, éventuellement entre 160°C et 180°C pendant une durée comprise entre 5 et 15 minutes, éventuellement entre 5 et 10 minutes.
